(19) Europäisches Patentamt
European Patent Office
Office européen des brevets

(11) Veröffentlichungsnummer: **0 210 130**
**A1**

(12) **EUROPÄISCHE PATENTANMELDUNG**

(21) Anmeldenummer: 86810308.6

(22) Anmeldetag: 11.07.86

(51) Int. Cl.⁴: C 08 L 29/04
C 09 D 11/10, B 41 M 5/035
D 06 P 5/00

(30) Priorität: 17.07.85 CH 3095/85

(43) Veröffentlichungstag der Anmeldung:
28.01.87 Patentblatt 87/5

(84) Benannte Vertragsstaaten:
BE CH DE FR GB IT LI NL

(71) Anmelder: CIBA-GEIGY AG
Klybeckstrasse 141
CH-4002 Basel(CH)

(72) Erfinder: Défago, Raymond
Bäumlihofstrasse 421
CH-4125 Riehen(CH)

(54) **Blindpaste und ihre Verwendung in Druckpasten zum Bedrucken von Zwischenträgern für den Transferdruck.**

(57) Eine strukturviskose, als Oel-in-Wasser Emulsion vorliegende Blindpaste, die in neuartiger Kombination ein Gemisch aus zwei zu Polyvinyl-alkohol hydrolisierten Polyvinylacetaten, die Molekulargewichte und Hydrolysegrade von 1,2 bis $2{,}2 \cdot 10^4$ und von 80 bis 85 Mo1% einerseits und von 2,3 bis $3{,}0 \cdot 10^4$ und von 70 bis 76 Mo1% andererseits als Bindemittel, eine Polyacrylsäure, die ein Molekulargewicht von 2 bis $5 \cdot 10^6$ aufweist und zusammen mit Lösungsmitteln, Emulgatoren und Neutralisationsmitteln als Wasser-in-Oel Emulsion vorliegt, als Verdickungsmittel sowie herkömmliche Entlüftungsmittel enthält, eignet sich besonders gut dazu, im Tranfserdruckverfahren zusammen mit Formulierungen von Dispersionsfarbstoffen in Druckpasten zum Färben und Bedrucken von Zwischenträgern und von synthetischen Fasermaterialien, insbesondere Geweben, verwendet zu werden.

EP 0 210 130 A1

CIBA-GEIGY AG
Basel (Schweiz)

1-15427/+

Blindpaste und ihre Verwendung in Druckpasten zum Bedrucken von Zwischenträgern für den Transferdruck

Das Färben und Bedrucken von Fasermaterialien für den Transferdruck stellt hohe Anforderungen an die rheologischen Eigenschaften der Druckpasten, die beim Bedrucken des Zwischenträgers in zeitgemässen Druckmaschinen oft hohen Scherkräften ausgesetzt werden. Zweckdienlich sind deshalb vor allem strukturviskose Druckpasten, bei welchen die Viskosität unter dem Einfluss von Scherkräften abnimmt, d.h. bei welchen sich die ursprüngliche Viskosität wieder einstellt, sobald der Einfluss der Scherkräfte aufhört. Solche strukturviskose Druckpasten weisen einen relativ niedrigen Fliessindex, d.h. fliessen leicht unter dem Einfluss von Scherkräften und verteilen sich gleichmässig z.B. in den Schablonen der Rotationsfilmdruckmaschinen. Zudem sind sie leicht rührbar und pumpbar.

Zudem müssen die Druckpasten auf dem bedruckten Zwischenträger eine genügende Reibechtheit und Haftfestigkeit aufweisen, was durch den Einsatz von ausgewählten Filmbildnern bzw. Bindemitteln erzielt werden muss. Gute, zweckdienliche Filmbildner bzw. Bindemittel stellen darüber hinaus Schutzkolloide dar, die eine stabilisierende Wirkung auf die mitverwendeten Farbstofformulierungen, die im wesentlichen darin besteht, dass die unerwünschte orthokinetische Koagulation der Farbstofformulierungen unter dem Einfluss hoher Scherkräfte unterdrückt wird.

Schliesslich dürfen die Druckpasten beim Bedrucken des Zwischenträgers keine Lufteinschlüsse enthalten, welche die Egalität und Sprikel- bzw. Stippenfreiheit der Drucke auf den Fasermaterialien, insbesondere Textilmaterialien, beeinträchtigen würde. Solche unerwünschte Lufteinschlüsse in den Druckpasten werden durch den Einsatz geeigneter Entlüftungsmittel vermieden.

Zum Erfüllen all dieser Anforderungen an den Druckpasten zum Bedrucken von Zwischenträgern für den Transferdruck werden Blindpasten eingesetzt, die ein Verdickungsmittel, ein Bindemittel und ein Entlüftungsmittel enthalten. Unter Blindpasten, auch Stammansätze oder Stammverdickungen genannt, sind im Rahmen der vorliegenden Erfindung wässrige Pasten aus Verdickungs-, Binde- und Entlüftungsmittel zu verstehen, die noch keine Farbstoffe enthalten. Nach dem Zusatz von Farbstoffen in der Regel als handelsübliche Farbstofformulierungen zu solchen Blindpasten werden die Druckpasten zum Bedrucken der Zwischenträger im Transferdruck erhalten.

Aus z.B. EP-A-0 100 808 ist eine Blindpaste zum Bedrucken von Zwischenträgern für den Transferdruck bekannt, die neben einem Entlüftungsmittel ein Copolymerisat aus Acrylsäure und Acrylamid als Verdickungsmittel und ein zu Polyvinylalkohol hydrolisiertes Polyvinylacetat mit einem Hydrolysegrad von 80-90 Mol% als Bindemittel enthält. Diese bekannten Blindpasten weisen jedoch den Nachteil auf, gegen hohe und langwirkende Scherkräfte, wie sie in modernen Druckmaschinen auftreten, keine besonders hohe Beständigkeit aufzuweisen. Zudem ist die Haftfestigkeit und Reibechtheit der unter Verwendung dieser bekannten Blindpasten bedruckten Zwischenträger nicht ganz befriedigend. Zudem müssen relativ grössere Mengen an Bindemitteln in den Blindpasten und entsprechende höhere Kosten in Kauf genommen werden.

Es wurde nun gefunden, dass die Nachteile der bekannten Blindpasten unerwarteterweise weitgehend vermieden werden können, wenn man eine Blindpaste einsetzt, die neben einem Entlüftungsmittel eine Polyacrylsäure als Verdickungsmittel und ein Gemisch aus zwei zu Polyvinylalkohol hydrolisierten Polyvinylacetaten mit einem voneinander verschiedenen Hydrolysegrad als Bindemittel einsetzt.

Gegenstand der vorliegenden Erfindung ist somit eine wässrige Blindpaste, die dadurch gekennzeichnet ist, dass sie

(A) ein zu Polyvinylalkohol hydrolisiertes Polyvinylacetat, das ein Molekulargewicht von 1,2 bis $2,2 \cdot 10^4$ und einen Hydrolysegrad von 80 bis 85 Mol Prozent aufweist,

(B) ein zu Polyvinylalkohol hydrolisiertes Polyvinylacetat, das ein Molekulargewicht von 2,3 bis $3,0 \cdot 10^4$ und einen Hydrolysegrad von 70 bis 76 Mol Prozent aufweist,

(C) Polyacrylsäure, die ein Molekulargewicht von 2 bis $5 \cdot 10^6$ aufweist,

und

(D) ein Entlüftungsmittel

enthält.

Weitere Gegenstände der vorliegenden Erfindung bilden

- die Verwendung der Blindpaste in wässrigen Druckpasten aus Farbstoffformulierungen zum Bedrucken von Zwischenträgern im Transferdruck,
- das Applikationsverfahren zum Färben und Bedrucken von Fasermaterialien unter Verwendung von wässrigen Druckpasten aus Farbstofformulierungen, welche die erfindungsgemässe Blindpaste enthält, zum Bedrucken der Zwischenträger und Transferieren der Farbstoffe auf die Fasermaterialien,
- die wässrige Druckpaste zur Durchführung des Applikationsverfahrens, die neben einer Farbstofformulierung die erfindungsgemässe Blindpaste enthält, und
- die nach dem Applikationsverfahren im Transferdruck bedruckten Zwischenträger und Fasermaterialien.

Die filmbildenden Komponenten (A) und (B) der erfindungsgemässen Blindpaste sind im Handel erhältlich und werden stets als Gemisch eingesetzt. Würde die Komponente (A) allein statt wie erfindungsgemäss in Gemisch mit der Komponente (B) eingesetzt,

so müssten wie bereits angedeutet höhere, kostenungünstigere Mengen an Komponente (A) in Kauf genommen werden. Würde hingegen die Komponente (B) allein statt erfindungsgemäss in Gemisch mit der Komponente (A) eingesestzt werden, so würden die aus diesen Blindpasten erhaltenen Druckpasten die folgenden Nachteile aufweisen:

- zu niedrige Löslichkeit in Wasser,
- zu hohe Viskosität,
- zu langsame Lösegeschwindigkeit,
- zu tiefer Trübungspunkt unter möglicher Bildung von Ausfällungen bei erhöhten Temperaturen.

Im Gemisch sind die Komponenten (A) und (B) in einem bevorzugten Gewichtsverhältnis (A):(B) von etwa 1:1 bis etwa 19:1, insbesondere 1:1 bis 9:1 enthalten.

Die als Komponente (C) angesetzte Polyacrylsäure ist in der Regel mindestens teilweise vernetzt und weist somit vorwiegend verzweigte Ketten auf. In wässrigem Medium, d.h. durch Zusatz von Wasser, ist die Polyacrylsäure der angegebenen Art vorteilhafterweise strukturviskos. Die Polyacrylsäure der angegebenen Art ist ebenfalls im Handel erhältlich.

In der Regel liegt die Komponente (C) in der erfindungsgemässen Blindpaste als wässrig organische Wasser-in-Oel Emulsion vor, die zusätzlich zur Polyacrylsäure der angegebenen Art, die als Aktivsubstanz eingesetzt wird, ein wasserunlösliches Lösungsmittel, Emulgatoren und ein Neutralisationsmittel enthält.

Als Lösungsmittel für die Oelphase kommen vor allem Kohlenwasserstoffe, z.B. technisches Lackbenzin oder technische Paraffinöle, insbesondere die im Handel erhältlichen Paraffinöle (z.B. ISOPAR®-Marken) in Betracht. Solche Lösungsmittel weisen in der Regel einen Flammpunkt über etwa 30°C, vorzugsweise von 50 bis 100°C, einen Siedebereich von etwa 160 bis etwa 220°C und ein mittleres Molekulargewicht von etwa 150 bis etwa 180 auf.

Bei den Emulgatoren ist der Einsatz eines Wasser-in-Oel Emulgators in Gemisch mit einem Oel-in-Wasser Emulgator besonders zweckmässig, um lagerstabile Wasser-in-Oel Emulsionen des als Komponente (C) eingesetzten Verdickungsmittels zu erhalten. Als Oel-in-Wasser Emulgatoren kommen z.B. Alkanolamide höhermolekularer Fettsäuren, insbesondere Ethanolamide von ungesättigten oder vorzugsweise gesättigten Fettsäuren mit 12 bis 22, vorzugsweise 12 bis 18 Kohlenstoffatomen wie Linol-, Linolen-, Oel-, Laurin-, Palmitin- und Stearinsäure, vor allem in Form ihrer technischen Gemische, Alkylen- oder vor allem Ethylenoxidaddukte aus Fettalkoholen, wobei sich die Fettalkohole von den vorstehend angegebenen Fettsäuren ableiten, z.B. Addukte aus Oleylalkohol und Ethylenoxid, Alkylen- vor allem Ethylenoxidaddukte von Estern aus Polyalkoholen wie Glycerin, Pentaerythrit oder Sorbit bzw. Anhydrosorbite und den Fettsäuren der vorstehend angegebenen Art, insbesondere Ethylenoxidaddukte von Sorbitansäureestern in Betracht. Als Wasser-in-Oel Emulgatoren werden vor allem die soeben beschriebenen Ester aus Polyalkoholen und Fettsäuren, z.B. Glycerinfettsäureester oder Sorbitanfettsäureester, vor allem Glycerinmonooleat oder insbesondere Sorbitanmono-, -di- oder -trioleat eingesetzt.

Als Neutralisationsmittel kommen Ammoniak, vorzugsweise als wässrige Lösung, Alkanolamine, d.h. Mono-, Di- und Trialkanolamine mit je 1 bis 4, vorzugsweise 2 oder 3 Kohlenstoffatomen im Alkanolrest, z.B. Triethanolamin, und vor allem Alkalimetallhydroxide, wie Kalium- und insbesondere Natriumhydroxid, vorzugsweise in Form ihrer wässrigen Lösungen, in Betracht.

Besonders lagerstabile, strukturviskose Wasser-in-Oel Emulsionen der Komponente (C) als Verdickungsmittel in der erfindungsgemässen Blindpaste enthalten

15 bis 30 Gewichtsprozent Polyacrylsäure der angegebenen Art,

10 bis 30 Gewichtsprozent Paraffinöl,

3 bis 15 Gewichtsprozent Ethanolamide von Fettsäuren, sowie Glycerin- oder Sorbitanfettsäureester und deren Addukte mit Ethylenoxid,

5 bis 10 Gewichtsprozent einer wässrigen, 25 bis 35 gewichtsprozentigen Natriumhydroxidlösung und

15 bis 67 Gewichtsprozent Wasser.

Sie sind in der Regel leicht sauer und weisen nach Verdünnen einer Probe der Emulsion mit Wasser einen pH-Wert von etwa 4,5 bis etwa 6,8, vorzugsweise 5,0 bis 5,5, auf.

Grundsätzlich sind alle handelsüblichen Entlüftungsmittel als Komponente (D) der erfindungsgemässen Verdickungsmittel einsetzbar, vorausgesetzt, dass sie keinen in Betracht fallenden, ionischen Charakter aufweisen, welcher die erwünschten rheologischen Eigenschaften der erfindungsgemässen Blindpaste beeinträchtigen würde. So kommen z.B. nichtionische, handelsübliche Silikonöle oder Silikonölemulsionen als Komponente (D) in Frage. Silikonöle weisen jedoch neben guten Entschäumungseigenschaften nur schwache Entlüftungseigenschaften auf. Bevorzugt sind deshalb für ihren Einsatz als Komponente (D) silikonölarme bis silikonölfreie Entlüftungsmittel, die im allgemeinen 0 bis etwa 10, insbesondere 2 bis 8 Gewichtsprozent eines herkömmlichen Silikonöls enthalten.

Bevorzugte Entlüftungsmittel enthalten z.B. als Aktivsubstanz hochsiedende Kohlenwasserstoffe, hydrierte Naphthalene, Mineralöle, fette Oele oder unlösliche Metallseifen oder deren Gemische und weisen gegebenenfalls den vorstehend angegebenen Gehalt an Silikonöl auf. Sie können aber auch als wässrige Lösungen vorliegen, die im allgemeinen, zusätzlich zu den Aktivsubstanzen der angegebenen Art ein nicht-ionisches Tensid, z.B. Ethylenoxidaddukte von einem Alkylphenol enthalten. Als bevorzugte Inhaltsstoffe bzw. Aktivsubstanzen der Entlüftungsmittel seien höhere Alkohole mit Siedepunkten über etwa 100°C, Terpentinöle, Mineralöle oder deren Gemische erwähnt. Bevorzugt werden Kohlenwasserstoffgemische eingesetzt, die im allgemeinen einen Flammpunkt über etwa 120°C, vorzugsweise von etwa 150 bis 220°C und einen Siedebereich von etwa 250 bis etwa 500°C (unter Normalbedingungen, bzw. bis höchstens etwa 300°C unter vermindertem Druck) aufweisen.

Im Vordergrund des Interesses stehen Entlüftungsmittel, die als Aktivsubstanzen ein Octanol oder dessen Gemisch mit hochsiedenden Kohlenwasserstoffgemischen enthalten, welche den vorstehend angegebenen Gehalt an Silikonöl aufweisen und gegebenenfalls als wässrige Zubereitung vorliegen, wobei diese Zubereitungen zusätzlich zu den Aktivsubstanzen Ethylenoxidaddukte von einem Alkylphenol mit 6 bis 12 Kohlenstoffatomen im Alkylrest als Tensid enthalten.

Als Beispiele von Vertretern solcher Entlüftungsmittel seien eine wässrige Zubereitung, die
10 bis 15 Gewichtsprozent 2-Ethyl-n-hexanol,
5 bis 10 Gewichtsprozent eines Silikonöls,
15 bis 25 Gewichtsprozent eines Adduktes aus 2 bis 9 Mol Ethylenoxid und 1 Mol p-Nonylphenol und
50 bis 70 Gewichtsprozent Wasser
enthält, oder insbesondere ein wasserfreies Gemisch aus
67 bis 89 Gewichtsprozent 2-Ethyl-n-hexanol,
10 bis 30 Gewichtsprozent eines Kohlenwasserstoffgemisches eines Siedebereiches von 300 bis 500°C und
1 bis 3 Gewichtsprozent eines Silikonöles
genannt.

Zur Herstellung der erfindungsgemässen Blindpasten werden die vorstehend beschriebenen Komponenten (A), (B), (C) und (D) in beliebiger Reihenfolge bei Raumtemperatur (15 - 25°C) mit Wasser unter Rühren vermischt. Hierbei tritt eine Phaseninversion von der ursprünglich als Wasser-in-Oel Emulsion vorliegenden Komponente (C) zu den nunmehr als Oel-in-Wasser Emulsionen vorliegenden Blindpasten ein.

In ihrer bevorzugten Ausführungsart enthält die als Oel-in-Wasser vorliegende Blindpaste
1,0 bis 2,5 Gewichtsprozent des Gemisches aus den Komponenten (A) und (B),
1,0 bis 5,0 Gewichtsprozent der als Emulsion vorliegenden Komponente (C),
0,2 bis 0,6 Gewichtsprozent der Komponente (D) und
91,9 bis 97,8 Gewichtsprozent Wasser.

Vor ihrem Einsatz zusammen mit Farbstofformulierungen zur Darstellung von Druckpasten werden die als Oel-in-Wasser Emulsionen vorliegenden Blindpasten durch Zusatz eines Neutralisationsmittels z.B. der vorstehend angegebenen Art zweckmässig auf einen pH-Wert von etwa 6 bis etwa 9, vorzugsweise 6,5 bis 8,0 eingestellt.

Als Farbstofformulierungen, die zusammen mit den erfindungsgemässen Blindpasten zu Druckpasten vermischt werden, kommen vor allem elektrolytarme Formulierungen von in Wasser unlöslichen bis schwerlöslichen Dispersionsfarbstoffen in Betracht, wie sie z.B. in DE-A-2 850 482 beschrieben sind. Es können aber auch salzhaltige Handelsformulierungen eingesetzt werden, sofern allfällige, durch die Elektrolyte bewirkte Viskositätsverluste durch Erhöhung der Komponente (C) kompensiert werden.

Die in den Formulierungen in Frage kommenden Farbstoffe sind die üblichen für das Thermotransferdruckverfahren geeigneten sublimierbaren Dispersionsfarbstoffe, die bei etwa 160 bis etwa 220°C in den Dampfzustand übergehen, d.h. Farbstoffe, deren Dampfdruck bei z.B. 200°C höher als etwa $10^{-5}$ bar ist. Sie gehören u.a. der Klasse der Nitrofarbstoffe der Anilinreihe, der Azofarbstoffe der Benzolreihe, sowie der Anthrachinon-, Chinolin-, Pyrazolon-, Triazol-, Pyridon- oder Styrylfarbstoffe an und sind z.B. in Colour Index, 3. Auflage, 1971, unter der Rubrik "Disperse dyes" beschrieben.

Neben den Farbstofformulierungen und den erfindungsgemässen Blindpasten können die Druckpasten gegebenenfalls optische Aufheller und übliche Zusätze wie z.B. Lösungsmittel und Emulgatoren enthalten. Lackbenzin als Lösungsmittel und Alkylenoxidaddukte von Fettalkoholen, z.B. Ethylenoxidaddukte des Oleylalkohols als Oel-in-Wasser Emulgatoren sind als fakultative Zusätze von Druckpasten von praktischer Bedeutung. Bevorzugte Druckpasten, die ein wasserunlösliches Lösungsmittel enthalten, liegen in der Regel als strukturviskose Oel-in-Wasser Emulsionen vor.

Die im Vordergrund des Interesses stehenden, strukturviskosen Druckpasten enthalten im allgemeinen 0,01 bis 20 Gewichtsprozent Farbstoffformulierung und 80 bis 99,99 Gewichtsprozent wässrige Blindpaste.

Beim Bedrucken der Zwischenträger mit den Druckpasten der vorstehend angegebenen Art, welche die erfindungsgemässe Blindpaste enthalten, wird die Druckpaste ganzflächig oder vorzugsweise stellenweise auf den Zwischenträger aufgebracht, wobei Druckmaschinen üblicher Bauart, z.B. Tiefdruck-, Rotationssiebdruck- und Flachfilmdruckmaschinen zweckmässig eingesetzt werden.

Der im Transferdruckverfahren eingesetzte Zwischenträger ist zweckmässig ein flexibles, vorzugsweise räumlich stabiles Band, ein Streifen oder eine Folie mit vorteilhaft glatter Oberfläche, welche hitzestabil und inert sind, d.h. keinerlei Affinität zu den verschieden Komponenten der Druckpasten aufweisen, und aus verschiedensten Arten von Materialien bestehen, z.B. Metall, wie eine Aluminium- oder Stahlfolie; Kunststoff; Papier oder textile Flächengebilde, die gegebenenfalls mit einem Film aus Vinylharz, Ethylcellulose oder Polyurethanharz beschichtet sein können. Wegen des niedrigen Gestehungspreises verwendet man vor allem Papierbahnen.

Im Transferdruckverfahren wird der bedruckte Zwischenträger vorzugsweise bei etwa 80 bis etwa 140°C, insbesondere 100 bis 120°C während etwa 5 bis etwa 20 Sekunden getrocknet. Zum Färben und Bedrucken des Fasermaterials wird anschliessend der Zwischenträger mit dem Fasermaterial in Kontakt gebracht und z.B. in einer Bügelpresse oder einem

Kalander unter Anwendung von Druck einer Wärmebehandlung vorzugsweise von etwa 120 bis etwa 220, insbesondere 190 bis 210°C während etwa 5 bis etwa 90, insbesondere 20 bis 60 Sekunden unterworfen, wobei der Farbstoff vom Zwischenträger auf das Fasermaterial transferiert.

Nach beendeter Wärmebehandlung wird das bedruckte Fasermaterial vom Zwischenträger getrennt. Das so bedruckte Fasermaterial bedarf in der Regel keiner Nachbehandlung, d.h. im allgemeinen weder einer Dampfbehandlung, um den Farbstoff zu fixieren, noch eines Waschens, um die Echtheiten zu verbessern.

Bei den zu bedruckenden Fasermaterialien handelt es sich in der Regel um Textilmaterialien, vorzugsweise um flächenförmige Gebilde wie Vliese, Filze, vor allem Teppiche, Gewirke und insbesondere Gewebe. Hierbei kommen Textilmaterialien aus halbsynthetischen und insbesondere vollsynthetische Fasern oder deren Gemische in Betracht. Bei den halbsynthetischen Fasern handelt es sich hauptsächlich um regenerierte Cellulosefasern, z.B. Viskosefasern und vor allem Acetatfasern (2 1/2- und Triacetat) und bei den vollsynthetischen Fasern hauptsächlich um Polyacrylnitril-, Polyamid- und insbesondere Polyesterfasern. Auch Mischgewebe aus Triacetat und Polyamid sind geeignet, nach dem erfindungsgemässen Verfahren bedruckt zu werden.

Indessen stehen vollsynthetische Gewebe aus Polyacrylnitril, Triacetat oder Polyester oder deren Gemische oder vor allem Gewebe aus reinem Polyacrylnitril oder insbesondere aus reinem Polyester im Vordergrund des Interesses.

Der Einsatz der Komponenten (A), (B), (C) und (D) der vorstehend angegebenen Art in neuartiger Kombination in der erfindungsgemässen Blindpaste bietet bei den daraus hergestellten Druckpasten die folgenden unvorhersehbaren Vorteile:

- hohe Beständigkeit der Druckpaste, wie eingangs bereits erwähnt, gegen hohe und langwirkende Scherkräfte
- gute Standschärfe der erhaltenen Musterungen beim stellenweisen

Bedrucken der Druckpasten auf dem Zwischenträger

- gute Reibechtheit, Haftfestigkeit und Lagerhaltbarkeit der bedruckten Zwischenträger
- gute Transferierbarkeit der Farbstoffe aus der Druckpaste vom Zwischenträger auf das Textilmaterial
- egale, reibechte, stippenfreie Drucke und, bei musterförmigen Bedrukken, Musterungen mit äusserst scharfen Konturen auf dem Textilmaterial nach dem Transferieren der Farbstoffe aus dem Zwischenträger
- gute Rührbarkeit der Druckpasten bzw. gute Zügigkeit der Blindpasten dank ihrem relativ niedrigen Fliessindex
- gute Wasserlöslichkeit der Druckpasten, welche das Auswaschen der Druckmaschinenteile (Schablonen, Rackel usw.) erleichtert
- hohe Lösegeschwindigkeiten der sich bei Maschinenstillständen allfällig bildenden Häute auf der Druckpastenoberfläche
- gute mechanische Eigenschaften, insbesondere Griffeigenschaften, der bedruckten Fasermaterialien.

Sofern nicht anders angegeben, beziehen sich die in den nachfolgenden Beispielen angegebenen Teile und Prozente auf das Gewicht.

<u>Beispiel 1:</u> Ein Zwischenträger aus Papier wird mit einer Rotationssiebdruckmaschine mit einer Druckpaste der folgenden Zusammensetzung stellenweise bedruckt:

5 g/kg einer elektrolytarmen, dispergierten Handelsformulierung des türkisfarbenen Dispersionsfarbstoffes der Formel

(1)

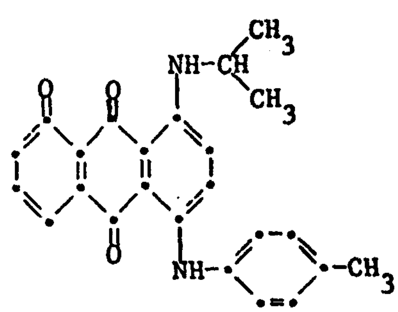

39,2 g/kg einer 20 %-igen, wässrigen Lösung aus einem zu Polyvinylalkohol hydrolisierten Polyvinylacetat, das ein Molekulargewicht von ca. 20'000 und einen Hydrolysegrad von ca. 83 Mol% aufweist.

9,8 g/kg einer 20 %-igen wässrigen Lösung aus einem zu Polyvinylalkohol hydrolisierten Polyvinylacetat, das ein Molekulargewicht von 25'000 bis 30'000 und einen Hydrolysegrad von ca. 73 Mol% aufweist.

20,3 g/kg einer strukturviskosen Wasser-in-Oel Emulsion aus

15 % einer teilweise vernetzten Polyacrylsäure, die vorwiegend verzweigte Ketten und ein Molekulargewicht von 2 bis 5 Millionen aufweist,

5 % eines Wasser-in-Oel Emulgators (Sorbitanmonooleat),

6 % eines Oel-in-Wasser Emulgators (Gemisch 2:1 eines Ethanolamids von Fettsäuren und eines Adduktes aus Sorbitanmonooleat und 80 Mol Ethylenoxid),

30 % Paraffinöl (Flammpunkt: 60°C, Siedebereich: 188 bis 206°C),

8 % einer 30 %-igen, wässrigen Natriumhydroxydlösung und

36 % entionisiertem Wasser,

4,2 g/kg eines Gemisches aus

80 % 2-Ethyl-n-hexanol

18 % eines Kohlenwasserstoffgemisches aus 63 % Paraffinen, 29 % Naphthenen und 8 % Aromaten, das einen Siedebereich von 340 bis 470°C und einen Flammpunkt von ca. 200°C aufweist und

2 % eines Silikonöls

23,8 g/kg einer wässrigen, 3 %-igen Natriumhydroxydlösung und

897,7 g/kg entionisiertes Wasser.

Die als strukturviskose Oel-in-Wasser Emulsion vorliegende Druckpaste weist einen pH-Wert von 7,0 und eine apparente Viskosität (Scheinviskosität), gemessen am Brookfield-Viskosimeter RVT mit Spindel 6 bei 20°C und 20 Umdrehungen/Minute, von 12'000 mPa•s auf.

Der bedruckte Zwischenträger wird bei 120°C während 8 Sekunden getrocknet. Der erhaltene Zwischenträger ist lagerfähig und reibecht.

Nun wird im Transferdruckverfahren die bedruckte Seite des Zwischenträgers mit einem Polyestergewebe eines Flächengewichtes von 100 $g/m^2$ in Kontakt gebracht, hierauf der Zwischenträger und das Gewebe während 30 Sekunden bei 210°C in einer Bügelpresse zusammengepresst, wobei der Farbstoff vom Zwischenträger auf das Gewebe transferiert.

Man erhält auf dem Polyestergewebe, das einen weichen Griff aufweist, einen türkisfarbenen, musterförmigen Druck auf weissem Grund mit guter Egalität, guten Echtheiten und mit scharfen Konturen.

Aehnliche Ergebnisse werden erzielt, wenn man in der Druckpaste
4,2 g/kg eines Gemisches aus
- 11 % 2-Ethyl-n-hexanol,
- 7 % eines Silikonöls,
- 22 % eines Adduktes aus 2 Mol Ethylenoxid und 1 Mol Nonylphenol und
- 60 % Wasser

oder
20,3 g/kg einer strukturviskosen, Wasser-in-Oel Emulsion, die
5 % Glycerinmonooleat, Sorbitandioleat oder Sorbitantrioleat als Wasser-in-Oel Emulgator enthält,

einsetzt.

Das gleiche gilt auch, wenn man in der Druckpaste
0,1 g/kg (statt 5 g/kg) der Formulierung des Farbstoffes der Formel (1) und 902,6 g/kg (statt 897,7 g/kg) entionisiertes Wasser einsetzt.

Beispiel 2: Man verfährt wie in Beispiel 1 angegeben, setzt jedoch [anstelle von 5 g/kg der Formulierung des Farbstoffes der Formel (1)]

3 g/kg der Formulierung des Farbstoffes der Formel (1) und

2 g/kg einer elektrolytarmen, dispergierten Handelsformulierung des gelben Dispersionsfarbstoffes der Formel

(2) 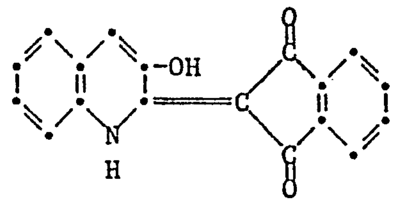

ein.

Man erhält auf dem Polyestergewebe, das auch einen weichen Griff aufweist, einen grünen, musterförmigen Druck auf weissem Grund mit guter Egalität, guten Echtheiten und mit scharfen Konturen.

Beispiel 3: Man verfährt wie in Beispiel 1 angegeben, setzt jedoch

100 g/kg (statt 5 g/kg) der Formulierung des Farbstoffes der Formel (1)

108 g/kg (statt 39,2 g/kg) der 20 %-igen, wässrigen Lösung aus dem zu Polyvinylalkohol hydrolisierten Polyvinylacetat, das ein Molekulargewicht von ca. 20'000 und einen Hydrolysegrad von ca. 83 Mol% aufweist,

12 g/kg (statt 9,8 g/kg) der 20 %-igen, wässrigen Lösung aus dem zu Polyvinylalkohol hydrolisierten Polyvinylacetat, das ein Molekulargewicht von 25'000 bis 30'000 und einen Hydrolysegrad von ca. 73 Mol% aufweist und

731,7 g/kg (statt 897,7 g/kg) entionisiertes Wasser

ein.

Man erhält auf dem Polyestergewebe, das auch einen weichen Griff aufweist, einen tiefblauen, musterförmigen Druck auf weissem Grund mit guter Egalität, guten Echtheiten und mit scharfen Konturen.

Beispiel 4: Man verfährt wie in Beispiel 1 angegeben, setzt jedoch

114 g/kg (statt 39,2 g/kg) der 20%-igen, wässrigen Lösung aus dem zu Polyvinylalkohol hydrolisierten Polyvinylacetat, das ein Molekulargewicht von ca. 20'000 und einen Hydrolysegrad von ca. 83 Mol% aufweist.

6 g/kg (statt 9,8 g/kg) der 20 %-igen wässrigen Lösung aus dem zu Polyvinylalkohol hydrolisierten Polyvinylacetat, das ein Molekulargewicht von 25'000 bis 30'000 und einen Hydrolysegrad von ca. 73 Mol% aufweist und

826,7 g/kg (statt 897,7 g/kg) entionisiertes Wasser

ein.

Man erhält auf dem Polyestergewebe, das auch einen weichen Griff aufweist, ebenfalls einen türkisfarbenen, musterförmigen Druck auf weissem Grund mit guter Egalität, guten Echtheiten und mit scharfen Konturen.

Beispiel 5: Man verfährt wie in Beispiel 1 angegeben, setzt jedoch

60 g/kg (statt 39,2 g/kg) der 20 %-igen, wässrigen Lösung aus dem zu Polyvinylalkohol hydrolisierten Polyvinylacetat, das ein Molekulargewicht von ca. 20'000 und einen Hydrolysegrad von ca. 83 Mol% aufweist,

60 g/kg (statt 9,8 g/kg) der 20 %-igen, wässrigen Lösung aus dem zu Polyvinylalkohol hydrolisierten Polyvinylacetat, das ein Molekulargewicht von 25'000 bis 30'000 und einen Hydrolysegrad von ca. 73 Mol% aufweist und

826,7 g/kg (statt 897,7 g/kg) entionisiertes Wasser

ein.

Man erhält auf dem Polyestergewebe, das auch einen weichen Griff aufweist, ebenfalls einen türkisfarbenen, musterförmigen Druck auf weissem Grund mit guter Egalität, guten Echtheiten und mit scharfen Konturen.

Beispiel 6: Ein Zwischenträger aus Papier wird mit einer Tiefdruckmaschine mit einer Druckpaste der folgenden Zusammensetzung stellenweise bedruckt:

5 g/kg der Formulierung des Farbstoffes der Formel (1)
49 g/kg der beiden in Beispiel 1 angegebenen Polyvinylalkohole,
10 g/kg der strukturviskosen Emulsion der in Beispiel 1 angegebenen Zusammensetzung,
2 g/kg des in Beispiel 1 angegebenen Gemisches aus 2-Ethyl-n-hexanol, dem angegebenen Kohlenwasserstoffgemisch und dem Silikonöl,
16,4 g/kg der 3 %-igen Natriumhydroxidlösung und
917,6 g/kg entionisiertes Wasser

enthält, wobei die Druckpaste einen pH-Wert von 9,0 und eine gemäss Beispiel 1 gemessene Scheinviskosität von 1400 mPa•s aufweist.

Anschliessend wird wie im Beispiel 1 angegeben das Polyestergewebe mit dem Zwischenträger im Transferdruckverfahren bedruckt.

Man erhält auf dem Polyestergewebe, das auch einen weichen Griff aufweist, ebenfalls einen türkisfarbenen, musterförmigen Druck auf weissem Grund mit guter Egalität, guten Echtheiten und mit scharfen Konturen.

Beispiel 7: Man verfährt wie in Beispiel 1 angegeben, setzt jedoch eine Druckpaste ein, die

5 g/kg der Formulierung des Farbstoffes der Formel (1),
100 g/kg der 20 %-igen, wässrigen Lösung aus dem zu Polyvinylalkohol hydrolisierten Polyvinylacetat, das ein Molekulargewicht von ca. 20'000 und einen Hydrolysegrad von ca. 83 Mol% aufweist,
25 g/kg der 20 %-igen wässrigen Lösung aus dem zu Polyvinylalkohol hydrolisierten Polyvinylacetat, das ein Molekulargewicht von 25'000 bis 30'000 und einen Hydrolysegrad von ca. 73 Mol% aufweist und
50 g/kg der strukturviskosen Emulsion der in Beispiel 1 angegebenen Zusammensetzung,
6 g/kg des in Beispiel 1 angegebenen Gemisches aus 2-Ethyl-n-hexanol, dem angegebenen Kohlenwasserstoffgemisch und dem Silikonöl,
10,8 g/kg der 3 %igen Natriumhydroxidlösung und
803,2 g/kg entionisiertes Wasser

enthält, wobei die Druckpaste einen pH-Wert von 6,0 und eine gemäss

Beispiel 1 gemessene Scheinviskosität von 37500 mPa•s aufweist.
Man erhält auf dem Polyestergewebe, das auch einen weichen Griff aufweist, ebenfalls einen türkisfarbenen, musterförmigen Druck auf weissem Grund mit guter Egalität, guten Echtheiten und mit scharfen Konturen.

Beispiel 8: Man verfährt wie in Beispiel 1 angegeben, setzt jedoch in der Druckpaste

200 g/kg einer elektrolytarmen, dispergierten Handelsformulierung eines schwarzen Dispersionsfarbstoffgemisches aus

7,2 Teilen des gelben Dispersionsfarbstoffes der Formel (2),

17,5 Teilen des roten Dispersionsfarbstoffes der Formel

(3) 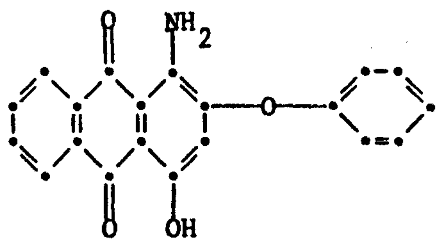

9,6 Teilen des blauen Dispersionsfarbstoffes der Formel

(4) 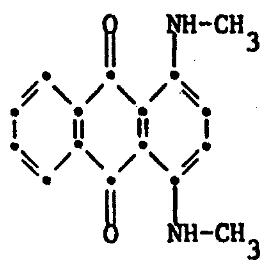 und

12 Teilen des blauen Dispersionsfarbstoffes der Formel

(5) 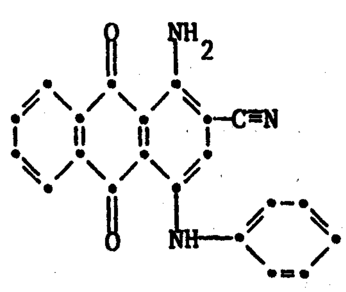

[anstelle von 5 g/kg der Formulierung des Farbstoffes der Formel (1)]

und

702,7 g/kg (statt 897,7 g/kg) entionisiertes Wasser

ein.

Man erhält auf dem Polyestergewebe, das einen weichen Griff aufweist, einen schwarzen, musterförmigen Druck auf weissem Grund mit guter Egalität, guten Echtheiten und mit scharfen Konturen.

Beispiel 9: Man verfährt wie in Beispiel 1 angegeben, setzt jedoch eine Druckpaste ein, die

20 g/kg einer elektrolytarmen, dispergierten Handelsformulierung des gelben Dispersionsfarbstoffes der Formel (2) [anstelle von 5 g/kg der Formulierung des Farbstoffes der Formel (1)] und

912,7 g/kg (statt 897,7 g/kg) entionisiertes Wasser

enthält, bedruckt damit den Zwischenträger aus Papier ganzflächig und transferiert den Farbstoff im Transferdruckverfahren während 30 Sekunden bei 200°C vom Zwischenträger auf ein Polyacrylgewebe eines Flächengewichtes von 140 $g/m^2$.

Man erhält auf dem Polyacrylgewebe, das einen weichen Griff aufweist, einen gelben Unidruck mit guter Egalität und guten Echtheiten.

Beispiel 10: Der gemäss Beispiel 9 ganzflächig bedruckte Zwischenträger aus Papier wird im Transferdruckverfahren während 30 Sekunden bei 200°C auf eine Polyamid-6,6-Maschenware eines Flächengewichtes von 150 $g/m^2$ appliziert.

Man erhält auf der Polyamidmaschenware ebenfalls einen gelben Unidruck mit guter Egalität und guten Echtheiten.

Beispiel 11: Der gemäss Beispiel 9 ganzflächig bedruckte Zwischenträger aus Papier wird im Transferdruckverfahren während 30 Sekunden bei 200°C auf Gewebe aus Polyester-Cellulose Mischungen (Polyesteranteil: 80 %) mit einem Flächengewicht von 170 $g/m^2$ und auf Gewebe aus Polyester-Wolle Mischungen (Polyesteranteil: 85 %) mit einem Flächengewicht von 150 $g/m^2$ appliziert.

Man erhält einen gelben Druck mit guter Egalität und guten Echtheiten des Polyesteranteils der Mischgewebe, während die natürlichen Fasern der

Mischgewebe, d.h. der Celluloseanteil bzw. der Wollanteil reserviert, d.h. unter Erzeugung von Zweitoneffekten ungefärbt verbleibt.

Patentansprüche

1. Wässrige Blindpaste, dadurch gekennzeichnet, dass sie
(A) ein zu Polyvinylalkohol hydrolisiertes Polyvinylacetat, das ein Molekulargewicht von 1,2 bis 2,2 • $10^4$ und einen Hydrolysegrad von 80 bis 85 Mol Prozent aufweist,
(B) ein zu Polyvinylalkohol hydrolisiertes Polyvinylacetat, das ein Molekulargewicht von 2,3 bis 3,0 • $10^4$ und einen Hydrolysegrad von 70 bis 76 Mol Prozent aufweist,
(C) Polyacrylsäure, die ein Molekulargewicht von 2 bis 5 • $10^6$ aufweist,
und
(D) ein Entlüftungsmittel
enthält.

2. Blindpaste nach Anspruch 1, dadurch gekennzeichnet, dass man als Komponente (C) eine Wasser-in-Oel Emulsion einsetzt, die zusätzlich zur Polyacrylsäure ein wasserunlösliches Lösungsmittel, Emulgatoren und ein Neutralisationsmittel enthält.

3. Blindpaste nach Anspruch 1, dadurch gekennzeichnet, dass es als Komponente (D) ein siliconölarmes bis siliconölfreies Entlüftungsmittel, vor allem hochsiedende Kohlenwasserstoffe, hydrierte Naphthalene, Mineralöle, fette Oele oder unlösliche Metallseifen oder deren Gemische, vorzugsweise einen höheren Alkohol mit einem Siedepunkt über 100°C, Terpentinöle, Mineralöle oder deren Gemische oder insbesondere ein Octanol oder dessen Gemisch mit hochsiedenden Kohlenwasserstoffgemischen enthält, welches gegebenenfalls einen Gehalt an Siliconöl aufweist.

4. Blindpaste nach Anspruch 1, dadurch gekennzeichnet, dass sie die Komponenten (A) und (B) in einem Gewichtsverhältnis (A):(B) von 1:1 bis 19:1, vorzugsweise von 1:1 bis 9:1, enthält.

5. Blindpaste nach einem der Ansprüche 1 bis 4, dadurch gekennzeichnet, dass sie

1,0 bis 2,5 Gewichtsprozent des Gemisches
aus den Komponenten (A) und (B),
1,0 bis 5,0 Gewichtsprozent der als Emulsion
vorliegenden Komponente (C),
0,2 bis 0,6 Gewichtsprozent der Komponente (D) und
91,9 bis 97,8 Gewichtsprozent Wasser
enthält.

6. Verwendung der Blindpaste gemäss einem der Ansprüche 1 bis 5 in wässrigen Druckpasten aus Farbstofformulierungen zum Bedrucken von Zwischenträgern im Transferdruck.

7. Verfahren zum Färben und Bedrucken von Fasermaterialien im Transferdruck unter Verwendung von wässrigen Druckpasten aus Farbstofformulierungen zum Bedrucken des Zwischenträgers, dadurch gekennzeichnet, dass die Druckpaste die Blindpaste gemäss einem der Ansprüche 1 bis 5 enthält.

8. Der nach dem Verfahren gemäss Anspruch 7 bedruckte Zwischenträger für den Transferdruck.

9. Das nach dem Verfahren gemäss Anspruch 8 bedruckte Fasermaterial.

10. Material nach Anspruch 9, dadurch gekennzeichnet, dass es textile synthetische Fasern, vorzugsweise Polyester-, Polyamid-, Polyacrylnitril- oder Celluloseacetatfasern oder deren Gemische enthält.

FO 7.5 PLP/cs*

Europäisches Patentamt

# EUROPÄISCHER RECHERCHENBERICHT

0210130
Nummer der Anmeldung

EP 86 81 0308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | EP-A-0 096 806 (CIBA-GEIGY) * Ansprüche 1,4-8; Seite 3, Absatz 2 * | 1,6-10 | C 08 L 29/04<br>C 09 D 11/10<br>B 41 M 5/035<br>D 06 P 5/00 |
| A | * Beispiel 4 * | 1 | |
| | --- | | |
| D,Y | DE-A-2 850 482 (CIBA-GEIGY) * Ansprüche 1,38-41,43,46-50 * | 1,6-10 | |
| | --- | | |
| Y | US-A-4 449 985 (J.R. DITZER, Jr.) * Spalte 4, Zeile 44 - Spalte 5, Zeile 3; Spalte 5, Zeile 50 - Spalte 6, Zeile 4 * | 1 | |
| | --- | | **RECHERCHIERTE SACHGEBIETE (Int Cl 4)** |
| P,Y | EP-A-0 179 737 (CIBA-GEIGY) * Ansprüche 1-3,7-10; Beispiele 1,2,4 * | 1,6-10 | C 08 L<br>C 09 D<br>B 41 M<br>D 06 P |
| | --- | | |
| D,A | EP-A-0 100 808 (CIBA-GEIGY) * Ansprüche 1,4,5,7-14 * | 1-3,6-10 | |
| | --- | | |
| A | EP-A-0 077 297 (CIBA-GEIGY) * Ansprüche 1,6-15 * | 1-3,6-10 | |
| | --- -/- | | |

Der vorliegende Recherchenbericht wurde für alle Patentansprüche erstellt

| Recherchenort | Abschlußdatum der Recherche | Prüfer |
|---|---|---|
| DEN HAAG | 21-10-1986 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

**EUROPÄISCHER RECHERCHENBERICHT**

0210130

Nummer der Anmeldung

EP 86 81 0308

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | CHEMICAL ABSTRACTS, Band 92, Nr. 20, 19. Mai 1980, Seite 64, Zusammenfassung Nr. 165168y, Columbus, Ohio, US; & JP-A-79 160 872 (MITSUBISHI CHEMICAL INDUSTRIES CO. LTD.) 19-12-1979 * Zusammenfassung * | 1 | |
| | ----- | | |
| | | | RECHERCHIERTE SACHGEBIETE (Int Cl 4) |

Der vorliegende Recherchenbericht wurde für alle Patentansprüche erstellt.

| Recherchenort | Abschlußdatum der Recherche | Prüfer |
|---|---|---|
| DEN HAAG | 21-10-1986 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument